# EUROPEAN PATENT SPECIFICATION

(11) **EP 2 594 381 B1**
(45) Date of publication and mention of the grant of the patent: **19.10.2016**
(21) Application number: 11400052.4
(22) Date of filing: 21.11.2011
(51) Int. Cl.: B29C 33/52, B29C 33/76, B29C 70/30, B29C 70/48

(54) **Method for producing a mould core and mould core made of said method**
Verfahren zur Herstellung eines Formkerns und mit besagtem Verfahren hergestellter Formkern
Procédé de production d'un noyau de moule et noyau de moule fabriqué à partir de ce procédé

(43) Date of publication of application: 22.05.2013
(73) Proprietor: AIRBUS HELICOPTERS DEUTSCHLAND GmbH, 86609 Donauwörth (DE)
(72) Inventor: Kunze, Steffen, 83620 Vagen (DE); Gierer, Thessa, 80807 München (DE); Kretschmer, Tom, 85521 Ottobrunn (DE); Hermann, Barbara, 85658 Höhenkirchen-Siegertsbrunn (DE)
(74) Representative: Schmid, Rudolf

(56) References cited:
- DE-A1- 10 342 867
- JP-A- 6 023 758
- JP-A- 8 174 143
- JP-A- 9 174 569
- US-A- 5 378 751

## Description

The invention is related to a method for producing a mould core or a plurality of mould cores with the features of claim 1 and to a mould core made according to said method with the features of claim 5.

Mould cores are used to produce hollow fibre composite components by forming the composite semi-finished products around said mould cores. Resin used to infiltrate the fibre textiles of the hollow fibre composite components is not allowed to enter into the mould core for a clean inner surface of the hollow fibre composite components.

The document DE102005011930 discloses a production of sealed water-soluble moulding cores comprising: filling a mould with water-soluble moulding material; curing it to produce an under-sized core; vacuum packing the core in film; and sealing the package. Disclosed is as well a method for producing hollow fibre composite components by applying reinforcing fibres, mostly in form of a textile, to the surface of a core as described, impregnating the textile with resin, curing it and removing the core. The sealing of the core by means of the film is destined for protection of the core from getting soaked by the resin applied to fibres attached to the core during subsequent production of the hollow fibre composite components. Disadvantages of said state of the art are that the film is not robust and that the film has to be applied manually by tailoring, wrapping, welding, plying, cutting of overhang and fixation of plies. A further disadvantage lies in the fact that the respective productions of the core and of its sealing are independent manual processes. Folds and plaits on the core resulting from the sealing film lead to inaccuracy of the inner surfaces of any subsequently produced hollow fibre composite components, said inaccuracy being particularly inconvenient in case of subsequent production of open hollow fibre composite components, namely if said inaccurate inner surfaces are needed to mount retroactively any components to the hollow fibre composite components. The core material from the organic binder systems of document DE102005011930 has to be water soluble. The cores of the state of the art are positioned passively. The cores of the state of the art are insufficient with regard to tightness, form-stability and handling at given process-parameters, such as temperature and pressure. Other cores of the state of the art made of metal alloys melting at low temperatures or made of salt and do not correspond in various aspects to environmental standards and/or work conditions.

The document JP08174143 discloses a special forming core, to improve the productivity, to reduce the cost, and to improve the quality of a formed article by achieving the pressurized pouring of the molten metal in a forming die while flowing the fluid in a core body. An inlet provided in an upper die is matched with the inlet side of a tube P provided in said special forming core. An outlet provided in a lower die is matched with the outlet side of the tube P provided in the special forming core. The special forming core is arranged between the upper die and the lower die to form a die having a hollow part.

The document JP09174569 discloses a hollow product with a complex shape moulded integrally by plastic injection moulding by setting a water-soluble core filled with a shape holding core body which is melted or disintegrated simultaneously in a water-soluble hollow outer shell body in a moulding mould.

It is an objective of the invention to provide a method for producing a hollow mould core for pressure stable operating conditions even at elevated temperatures. It is a further objective of the invention to provide a mould core that is accurate after infusion with regard to dimensions and tolerances and that is optimized for process and production of open hollow fibre composite components and with regard to storage, solubility and compatibility for humans. It is a further objective of the invention to provide a method for producing a mould core that may be re-used, is low weight, robust and suitable for subsequent preforming directly on the mould core. It is a further objective of the invention to provide a method for producing a mould core with an option for serial production, i. e. economic semi-finished products, base materials, and cycle times.

The solution is provided with a method for producing a mould core with the features of claim 1 and with a mould core with the features of claim 5. Preferred embodiments of the invention are presented with the subclaims.

According to the invention a method for producing a mould core or a plurality of preferably aligned mould cores comprises the steps of providing a removable mould core material comprising at least one mould basic material and at least one binder, producing a hollow core shell, filling the removable mould core material into the tight core shell, and curing of the at least one binder of the at least one mould basic material inside the tight core shell. The inventive method for producing a mould core allows high procedural stability at a high degree of automation for serial production with faster cycle times, particularly a fully automated production of the entire mould core, with advantages regarding quality, such as avoidance of folds and plaits for accurate profiling and reproduction with subsequent cost reduction for the production of hollow fibre composite components for use in cell structures of helicopters, aircraft doors, etc.. The avoidance of folds and plaits on the exterior surface of a mould core produced according to the inventive method provides for clean and accurate inner surfaces of the hollow fibre composite components produced on said mould core. Said clean and accurate inner surfaces lead to optimized hollow fibre composite components with regard to weight and stiffness and any elements can be fitted advantageously to said clean and accurate inner surfaces of said open hollow fibre composite components. The form-stable, hybrid type mould core produced by the inventive method is robust and accurate till up to 190° C due to an inherently stable sealing by means of a tight core shell and allows adaption of temperature dilatation to process pressures and -temperatures. The production of the sealing for the mould core, namely the core shell, in a step before filling of the removable mould core material into the core shell allows improved handling and contributes to appropriate dilatation of the entire inventive mould core system. Preforms may be applied directly onto the tight mould core produced by the inventive method. Materials and processes corresponding to environmental standards and/or work conditions may be used for the inventive method. The inventive method further allows low weight mould cores with enhanced suitability for storage and/or transport.

The inventive method with subsequent preforming directly on the mould core may be applied for the production of hollow fibre composite components in the aerospace, automobile or energy sector.

According to a preferred embodiment of the invention producing the core shell is effected automatically by rotary moulding for a reproducible sealing accurately along the profile of the negative mould. The core shell may as well be produced by blow moulding, injection moulding or die casting.

According to the invention an armature is integrated during moulding, e.g. rotary moulding, of the core shell and/or during filling of the removable mould core material into the core shell allowing a variable geometry according to applied filler medium. The armature allows accurate positioning of the mould core or the core shell within a mould tool such as an RTM tool, a unilaterally fixed mould, e. g. vacuum infusion, prepreg in autoclave, a multilaterally fixed mould, e. g. compression moulds for prepreg, SMC-, BMC-moulding presses, injection moulding tools, etc. and/or allows accurate positioning of a plurality of aligned mould cores or aligned core shells within a mould tool for subsequent production of hollow fibre composite components.

According to the invention filling of the removable mould core material into the core shell is effected by preferably automated core shooting said core shooting being more preferably a one shot process. The filling of the shot mould core material into the prefabricated core shell allows damping by means of the core shell.

According to a preferred embodiment of the invention the mould core is of a form-stable hybrid type with a tight core shell and a removable mould core material comprising at least one expandable mould basic material to contribute to dilatation of the mould core. The tight core shell and the removable mould core material, e. g. a soluble mould core material, facilitate removal of the inventive mould core from inside of the hollow fibre composite components.

According to a further preferred embodiment of the invention the mould core comprises a material with a high specific coefficient of thermal expansion for a curing process at elevated temperature and pressure, e.g. like aluminium with a coefficient of thermal expansion of ∼ 24 * 10⁻⁶/K preferably for the mould core material or like silicone with a coefficient of thermal expansion of 100 - 400 * 10⁻⁶/K preferably for the tight core shell. The control of dilatation of the inventive mould core by suitable choice of the coefficients of thermal expansion for the mould core material, e.g. polymers, metals, graphite, ceramics, ... and/or the tight core shell allows exact pursuit and reproduction of the dilatation of the hollow fibre composite components during curing by the inventive mould core thus avoiding during curing any inappropriate appliance of resin to the hollow fibre composite and thus providing for minimum weight at maximum stiffness for the hollow fibre composite components produced by the inventive mould core.

According to the invention the core shell has a wall thickness of less than 2 mm to allow more easy dissociation of the mould core from the finished hollow fibre composite mouldings due to a core shell with reduced stiffness.

According to a further preferred embodiment of the invention the core shell is made of a material with dissociative characteristics.

According to a further preferred embodiment of the invention the armature, the removable mould core material and/or the core shell are re-usable for a more economic production.

According to a further preferred embodiment of the invention the removable mould core material is conditioned for auto trickling.

A preferred embodiment of the invention is presented in detail with reference to the following description and the attached drawing.
Fig. 1 shows steps of production of a mould core according to the inventive method with the subsequent production of a hollow fibre composite component, and
Fig. 2 shows a partial cross sectional view of a mould core after a step 1 of the inventive method.

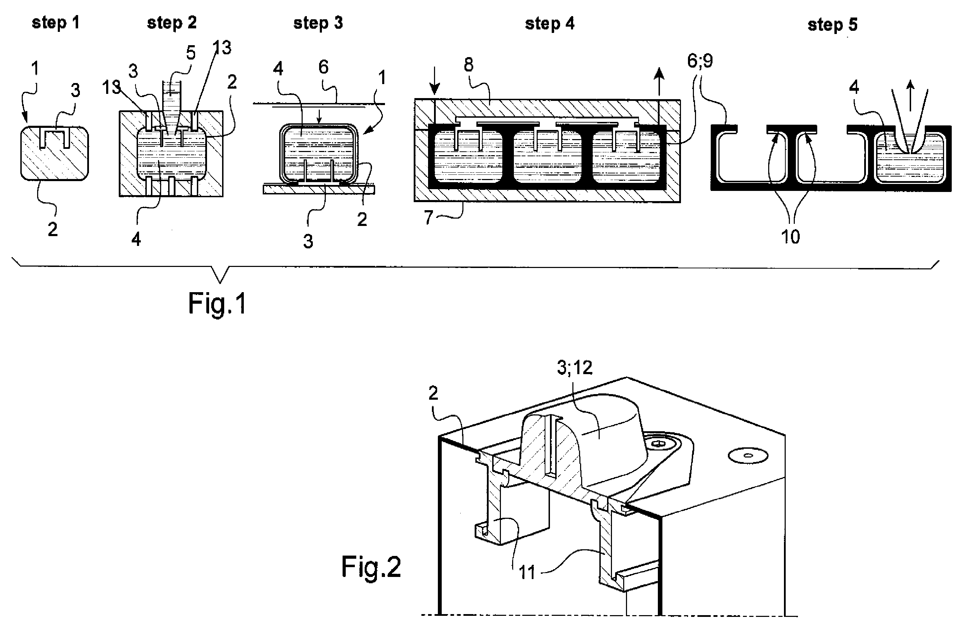

According to Fig. 1, in a first step ("step 1") of producing a mould core 1, a hollow core shell 2 is produced through rotary moulding by filling a thermoplastic product with high elastomeric properties made of block copolymers and rigid crystalline PBT segments and soft amorphous long chain polyether segments (thermoplastic, PBT) in a closed cavity of a rotary moulding tool (not shown) and integrating an armature 3 into the core shell 2. The thermoplastic, PBT is set by heating in an oven. The core shell 2 is tight for applications with low viscosity resins. The core shell 2 has a wall thickness of 2 mm and is stable or semi-stable. The armature 3 is part of a positioning system for the mould core 1 in a subsequent process of preparing a fibre reinforced compound preferably in a Resin Transfer Moulding (RTM) tool (see step 4).

In a second step ("step 2") of producing the mould core 1, the hollow core shell 2 is filled with removable mould core material 4 by core shooting means 5 under high pressure and high temperature. The removable mould core material 4 comprises at least one mould basic material and at least one binder. The removable mould core material 4 hardens inside the core shell 2 and stabilizes the core shell 2. Core shooting takes effect with the help of the armature 3. Venting nozzles 13 with a screen allow escape of the air pushed aside by the injected mould core material 4 when injected into the core shell 2 by the core shooting means 5 and/or venting the core material for curing purposes.

The respective coefficients of thermal expansion of the removable mould core material 4 and the sealing core shell 2 correspond to the needs of dilatation within a temperature range from 0° C to 190° C - under process parameters, such as demanding pressures from 0 - 10 bar, 7 - 10 bar or even up to 50 bar - in a subsequent process of production of a hollow fibre composite component with a mould core's specific coefficient of thermal expansion of ∼ 1 - 500 * 10⁻⁶/K, e.g. provided by aluminium with a coefficient of thermal expansion of ∼ 24 * 10⁻⁶/K for the mould core material or silicone with a coefficient of thermal expansion of 100 - 400 10⁻⁶/K, and for an appropriate strain of the mould core 1. Such a process of production of a hollow fibre composite component is described in steps 3 to 5. The respective coefficients of thermal expansion of the removable mould core material 4 and of the sealing core shell 2 are adapted such that the mould core 1 is continuously attached to the inner surface of the hollow fibre composite component or fibre composite semi-finished products respectively to avoid supply of any excess resin (except resin needed for accurate composite component manufacturing) between the mould core 1 and mould-tool while said mould-tool expands under the temperatures of up to 190° C during curing. The respective dimensions of the removable mould core material 4 and of the sealing core shell 2 are adapted to correspondingly impose attachment of the mould core 1 to the hollow fibre composite component or fibre composite semi-finished products respectively during curing.

The removable mould core material 4 inside the core shell 2 provides form stability to the core shell 2 and the characteristics for the thermal expansive behaviour of the mould core 1 provide for a high counter pressure to allow pressing of layers between the accomplished mould core and tool surface or between several mould cores 1 for preparation of the hollow fibre composite component and for a high counter pressure during injection of the resin during curing.

In a third step ("step 3") a preform of fibre layers 6 is arranged around the stable and robust mould core 1. The armature 3 in the mould core 1 is mounted in an opening at one side of the hollow core shell 2.

In a fourth step, three separate mould cores 1 with the fibre layers 6 arranged around their respective peripheries are inserted into a component mould tool 7. The three mould cores 1 are inserted, positioned and/or fixed inside the component mould tool 7 by means of the armatures 3. The component mould tool 7 is closed with a cover 8. Low viscosity resin is injected with a pressure of 7 bar (7.000 hPa) into the component mould tool 7 and cured with the fibre layers 6 to fibre composite components 9. The cover 8 is lifted and the component mould tool 7 and the fibre composite components 9 are cooled.

In a fifth step ("step 5") the core shells 2 are opened by cutting or mechanical dislocation of said shells 2. The armatures 3 are removed from the mould cores 1. The removable mould core material 4 is rinsed with water by means of rinsing nozzles, suitable rinse parameters (T, p), sucking and/or solvent extraction (not shown) to release the removable mould core material 4 from the core shell 2. The sealing core shell 2 is removed either by destruction or through suitable openings and covers (not shown) to leave behind hollow fibre composite components 9 with undercuts 10.

The armatures 3 and the removable mould core material 4 are reusable. The cycle time for draining of a mould core 1 from a hollow fibre composite component 9, such as a hinge arm, is less than half an hour.

According to Fig. 2 corresponding features are referred to with the same references. The hollow core shell 2 of mould core 1 is provided with the armature 3 after the step 1. The armature 3 is fixed with flanges 11 in an opening of the hollow core shell 2. A removable plug 12 is provided on the armature 3 to promote access for the core shooting means 5 to the interior of the hollow core shell 2. The plug 12 is screwed to the flanges 11 of armature 3.

**Reference List:**

| | |
|---|---|
| 1 | Mould core |
| 2 | Hollow core shell |
| 3 | Armature |
| 4 | Mould core material |
| 5 | Core shooting means |
| 6 | Fibre layers |
| 7 | Component Mould tool |
| 8 | Cover |
| 9 | Fibre composite components |
| 10 | Undercuts |
| 11 | Flanges |
| 12 | Removable plug |
| 13 | Venting nozzles |

## Claims

1. A method for producing at least a mould core (1) for subsequent manufacturing a hollow fibre composite component (9) for aerospace, the hollow fibre composite component (9) comprising fibre layers (6) and a resin, said method comprising the following steps of: Providing a removable mould core material (4) comprising at least one mould basic material and at least one binder, Producing a hollow core shell (2), Filling the removable mould core material (4) into the hollow core shell (2), **characterized in that**:
- the hollow core shell (2) is made of block copolymers and rigid crystalline PBT segments and soft amorphous long chain polyether segments, having a wall thickness of 2 mm or less and being stable or semi stable; the core shell (2) is prefabricated in a first step comprising: filling a closed cavity with an elastomeric thermoplastic product, an armature (3) being in the closed cavity, the armature (3) being fixed with flanges to an opening of the hollow core shell (2), and a with a removable plug (12) screwed to the flanges of the armature (3), integrating the armature (3) into the hollow core shell (2) and curing the elastomeric thermoplastic product to be set by heating;
- in a second step, the removable mould core material (4) being injected into the hardened core shell (2) by core shooting under high pressure and temperature through the armature (3) and being hardened inside the hollow core shell (2) .

2. The method according to claim 1, **characterized by** the first step comprising one of: rotary moulding, blow moulding, injection moulding or die casting, for producing the hollow core shell (2).

3. The method according to claim 1, **characterized by** the core shooting for filling the removable mould core material (4) into the core shell (2), is automated.

4. The method according to claim 3, **characterized by** said core shooting being a one shot process.

5. A mould core (1) made by the method according to any of claims 1-4, **characterized by** being of a form-stable hybrid type with a hollow core shell (2) and a removable mould core material (4) comprising at least one expandable mould basic material, the removable mould core material (4) and the hollow core shell (2) having each a coefficient of thermal expansion; the coefficient of thermal expansion of the tight core shell (2) exceeding the coefficient of thermal expansion of the removable mould core material (4).

6. The mould core (1) of claim 5 **characterized in that** the removable mould core material (4) comprises aluminium with a coefficient of thermal expansion of ∼ 24 * 10-6/K and the hollow core shell (2) is provided with silicone having a coefficient of thermal expansion of 100 - 400 10⁻⁶/K.

7. The mould core (1) according to claim 5, **characterized in that** the core shell (2) is made of a material with dissociative characteristics to the resin used for the subsequent manufacturing of the hollow fibre composite component (9).

8. The mould core (1) according to claim 5, **characterized in that** at least one of: the armature (3), the removable plug (12), the removable mould core material (4) or the hollow core shell (2) are re-usable.

9. The mould core (1) according to claim 5 **characterized in that** the removable mould core material (4) is conditioned for auto trickling by at least one of: water rinse, sucking and solvent extraction.

## Patentansprüche

1. Verfahren zur Herstellung mindestens eines Formkerns (1) zur anschließenden Herstellung einer hohlen Faserverbundstoffkomponente (9) für die Luft- und Raumfahrttechnik, wobei die hohle Faserverbundstoffkomponente (9) Faserschichten (6) und ein Harz aufweist, wobei das Verfahren die folgenden Schritte aufweist: Bereitstellen eines entfernbaren Formkerngrundstoffmaterials und mindestens eines Bindemittels, Herstellen einer hohlen Kernschale (2), Einfüllen des entfernbaren Formkernmaterials (4) in die hohle Kernschale (2),
**dadurch gekennzeichnet, dass**:
- die hohle Kernschale (2) aus Blockcopolymeren und starren kristallinen PBT-Segmenten und weichen amorphen langkettigen Polyethersegmenten hergestellt ist, eine Wandstärke von 2 mm oder weniger aufweist und stabil oder halbstabil ist, wobei die Kernschale (2) in einem ersten Schritt vorgefertigt ist, der aufweist: Füllen eines geschlossenen Hohlraums mit einem thermoplastischen elastomeren Produkt, wobei sich eine Armatur (3) in dem geschlossenen Hohlraum befindet, wobei die Armatur (3) mit Flanschen an einer Öffnung der hohlen Kernschale (2) befestigt ist, und wobei eine lösbare Verschlusskappe (12) mit den Flanschen der Armatur (3) verschraubt ist, Einführen der Armatur (3) in die hohle Kernschale (2) und Aushärten des zu erhaltenden elastomeren thermoplastischen Produkts durch Erwärmen,
- in einem zweiten Schritt das entfernbare Formkernmaterial (4) in die ausgehärtete Kernschale (2) durch Kernschießen unter hohem Druck und bei hoher Temperatur durch die Armatur (3) eingespritzt wird und in der hohlen Kernschale (2) gehärtet wird.

2. Verfahren nach Anspruch 1, **dadurch gekennzeichnet, dass** der erste Schritt eines der folgenden Verfahren aufweist: Rotationsformpressen, Blasformen, Spritzgießen oder Druckgießen zur Herstellung der hohlen Kernschale (2).

3. Verfahren nach Anspruch 1, **dadurch gekennzeichnet, dass** das Kernschießen zum Einfüllen des entfernbaren Formkernmaterials (4) in die Kernschale (2) automatisiert ist.

4. Verfahren nach Anspruch 3, **dadurch gekennzeichnet, dass** das Kernschießen ein Direktverfahren ist.

5. Formkern (1), hergestellt durch das Verfahren nach einem der Ansprüche 1 bis 4, **dadurch gekennzeichnet, dass** er von einem formstabilen Hybridtyp ist, mit einer hohlen Kernschale (2) und einem entfernbaren Formkernmaterial (4), welches mindestens ein expandierbares Formgrundmaterial aufweist, wobei das entfernbare Formkernmaterial (4) und die hohle Kernschale (2) jeweils einen thermischen Ausdehnungskoeffizienten aufweisen, wobei der thermische Ausdehnungskoeffizient der harten Kernschale (2) größer ist als der thermische Ausdehnungskoeffizient des entfernbaren Formkernmaterials (4).

6. Formkern (1) nach Anspruch 5,
**dadurch gekennzeichnet, dass** das entfernbare Formkernmaterial (4) Aluminium aufweist mit einem thermischen Ausdehnungskoeffizienten von etwa 24 * 10⁻⁶/K, und wobei die hohle Kernschale (2) mit Silikon versehen ist mit einem thermischen Ausdehnungskoeffizienten von 100 bis 400 * 10⁻⁶/K.

7. Formkern (1) nach Anspruch 5, **dadurch gekennzeichnet, dass** die Kernschale (2) aus einem Material mit trennenden Eigenschaften bezüglich des Harzes hergestellt ist, welches für die nachfolgende Herstellung der hohlen Faserverbundstoffkomponente (9) verwendet wird.

8. Formkern (1) nach Anspruch 5, **dadurch gekennzeichnet, dass** wenigstens eines der folgenden Teile wiederverwendbar ist: die Armatur (3), die entfernbare Veschlusskappe (12), das entfernbare Formkernmaterial (4) oder die hohle Kernschale (2).

9. Formkern (1) nach Anspruch 5, **dadurch gekennzeichnet, dass** das entfernbare Formkernmaterial (4) aufbereitet ist zum automatischen Verrieseln durch Spülen mit Wasser und/oder Absaugen und Lösungsmittelextraktion.

## Revendications

1. Une méthode pour produire au moins un noyau de moule (1) pour la fabrication ultérieure d'un élément creux en composite et fibres (9) pour l'aéronautique, l'élément creux en composite et fibres (9) comprenant des couches de fibres (6) et une résine, ladite méthode comprenant les étapes suivantes de : réalisation d'un matériau de noyau de moule amovible (4) comprenant au moins un matériau de base de moule et au moins un liant, production d'une coque creuse de noyau (2), remplissage de la coque creuse de noyau (2) avec le matériau de noyau de moule amovible (4), **caractérisée en ce que** :
- la coque creuse de noyau (2) est constituée de segments de copolymères blocs et de segments PBT cristallins rigides ainsi que de segments de polyéthers amorphes à chaîne longue, qui présente une épaisseur de paroi de 2 mm ou moins et qui est stable ou semistable ; la coque de noyau (2) est préfabriquée lors d'une première étape comprenant : le remplissage d'une cavité fermée avec un produit élastomère thermoplastique, une armature (3) étant située dans la cavité fermée, l'armature (3) étant fixée par des épaulements à une ouverture de la coque creuse de noyau (2), et avec un bouchon amovible (12) vissé aux épaulements de l'armature (3), l'intégration de l'armature (3) dans la coque creuse de noyau (2) et la polymérisation du produit élastomère thermoplastique qui est durci par chauffage ;
- dans une deuxième étape, le matériau de noyau de moule amovible (4) est injecté dans la coque de noyau durcie (2) en tirant le noyau à pression et température élevées à travers l'armature (3) et est durci à l'intérieur de la coque creuse de noyau (2).

2. La méthode selon la revendication 1, **caractérisée en ce que** la première étape comprend une étape de : roto-moulage, moulage par soufflage, moulage par injection ou coulée sous pression, pour produire la coque creuse de noyau (2).

3. La méthode selon la revendication 1, **caractérisée en ce que** le tirage du noyau pour le remplissage du matériau de noyau de moule amovible (4) dans la coque de noyau (2) est automatisée.

4. La méthode selon la revendication 3, **caractérisée en ce que** le tirage du noyau est un processus en une seule étape.

5. Un noyau de moule (1) réalisé par la méthode selon l'une quelconque des revendications 1-4, **caractérisé en ce qu'**il est de type hybride à stabilité de forme avec une coque creuse de noyau (2) et un matériau de noyau de moule amovible (4) comprenant au moins un matériau de base de moule dilatable, le matériau de noyau de moule amovible (4) et la coque creuse de noyau (2) présentant chacun un coefficient de dilatation thermique; le coefficient de dilatation thermique de la coque de noyau étanche (2) étant supérieur au coefficient de dilatation thermique du matériau de noyau de moule amovible (4)

6. Le noyau de moule (1) selon la revendication 5 **caractérisé en ce que** le matériau de noyau du moule amovible (4) comprend de l'aluminium avec un coefficient de dilatation thermique de ≈ 24 * 10-6/K et la coque creuse de noyau (2) est pourvue de silicone présentant un coefficient de dilatation de 100 - 400 10⁻⁶/K.

7. Le noyau de moule (1) selon la revendication 5, **caractérisé en ce que** la coque de noyau (2) est constituée d'un matériau présentant des caractéristiques dissociatives par rapport à la résine utilisée pour la fabrication ultérieure de l'élément creux en composite et fibres (9).

8. Le noyau de moule (1) selon la revendication 5, **caractérisé en ce qu'**au moins l'un: de l'armature (3), du bouchon amovible (12), du matériau de noyau de moule amovible (4) ou de la coque creuse de noyau (2) sont réutilisables.

9. Le noyau de moule (1) selon la revendication 5 **caractérisé en ce que** le matériau du noyau de moule amovible (4) est conditionné pour l'auto-écoulement par au moins l'un des: rinçage à l'eau, aspiration et extraction de solvent.
